# EUROPEAN PATENT APPLICATION

(11) **EP 2 986 019 A1**
(43) Date of publication of application: **17.02.2016**
(21) Application number: 15180710.4
(22) Date of filing: 12.08.2015
(51) Int. Cl.: H04N 21/4788, H04N 21/41, H04N 21/84

(54) **USER TERMINAL APPARATUS, CONTROL METHOD THEREOF, AND MULTIMEDIA SYSTEM**

(30) Priority: 14.08.2014 KR 20140106236
(71) Applicant: Samsung Electronics Co., Ltd., Suwon-si, Gyeonggi-do (KR)
(72) Inventor: HYEON, Byeong-cheol, Gyeonggi-do (KR); AGARWAL, Pankaj, Gyeonggi-do (KR)
(74) Representative: Walaski, Jan Filip

(57) **Abstract**

A user terminal apparatus includes: a first communicator configured to receive content information about a content displayed on a display apparatus; a second communicator configured to communicate with an external apparatus; a display configured to display a text input screen; an inputter configured to receive a text and a user command; and a controller configured to, in response to the content information being received through the first communicator, add tag information corresponding to the content information to the text input screen and display the tag information, and control the second communicator to transmit a message having text added with the tag information to the external apparatus.

## Description

The present invention relates to a user terminal apparatus which can automatically acquire a tag to be added to a text input screen and add the tag.

Due to the development of electronic technologies, various kinds of user terminal apparatuses have been developed and distributed, and these apparatuses may be equipped with various functions to meet users' needs. Therefore, users can experience various services through various kinds of user terminal apparatuses, such as mobile phones, tablets, etc.

For example, a smartphone user may send a message to another user through a message service such as a Short Message Service (SMS) or Multimedia Messaging Service (MMS), and may post about a specific subject or write on a specific web page using a Social Network Service (SNS).

The user of the user terminal apparatus may view content through an external display apparatus, and may transmit or post a message related to the content to another user, or post on an SNS, while viewing the content. In addition, the user may access a web page related to the content and leave comments about the corresponding content.

Further, the user of the related-art user terminal apparatus may directly input information about the content that the user is viewing, in addition to the message to be sent. For example, when the user wants to leave comments about a broadcast program that the user is viewing on TV on a web page or an SNS, the user may directly input general information about the corresponding broadcast program, such as to which program the comments pertain or which channel airs the program, in addition to the comments that the user wants to leave.

Therefore, there is a demand for a method for reducing a user inconvenience of having to directly input information about a content that a user is viewing, and thus allowing the user to concentrate on writing and sending a message.

Aspects of one or more exemplary embodiments may address the above-mentioned problems and/or disadvantages and may provide at least the advantages described below.

Accordingly, an aspect of one or more exemplary embodiments is to provide a user terminal apparatus which, when a user of the user terminal apparatus writes a message about content that the user is viewing, can automatically add general information about the content to a text input screen, a control method thereof, and a multimedia system.

According to an aspect of an exemplary embodiment, there is provided a control method of a user terminal apparatus including: receiving content information related to content displayed on a display apparatus; adding tag information corresponding to the content information to a text input screen displayed on the user terminal apparatus, and displaying the tag information; and providing a text including the tag information to an external apparatus.

The control method may further include displaying a user interface (UI) to execute an application for adding the tag information, and receiving the content information in response to a user command to execute the application being received.

The adding and displaying the tag information may include: in response to the text being received at the text input screen, determining whether the text is related to the content; in response to the received text being related to the content, acquiring tag information to be added to the text using the received content information; and adding the tag information to at least one area of the text input screen and displaying the tag information.

The determining whether the text is related to the content may include, in response to the text input screen being a web page related to the content, determining that the received text is related to the content.

The tag information may be added to a title entering area in the web page.

The determining whether the text is related to the content may include displaying a user interface (UI) to receive a user command to add the tag information to the text input screen, and, in response to the user command to add the tag information being received, determining that the received text is related to the content.

The content information may be metadata including information related to the content, and the tag information may include at least one of a title of the content, a channel, a source which provides the content, product information included in the content, place information, and person information.

The content information may include at least one of an image of the content and a sound of the content, and wherein the acquiring the tag information comprises: identifying the content based on at least one of the image of the received content and the sound of the received content; acquiring metadata about the identified content; and acquiring the tag information using the acquired metadata.

The content information may include tag information related to the content that is generated in the display apparatus.

The adding and displaying the tag information may include: displaying a plurality of pieces of tag information corresponding to the content information; and, in response to at least one of the plurality of pieces of tag information being selected by a user, adding the selected at least one piece of tag information to the text input screen and displaying the tag information.

The control method may further include editing the tag information displayed on the text input screen according to a user command.

The external apparatus may be an SNS server or a web server.

According to an aspect of another exemplary embodiment, there is provided a user terminal apparatus including: a first communicator configured to receive content information related to content displayed on a display apparatus; a second communicator configured to communicate with an external apparatus; a display configured to display a text input screen; an inputter configured to receive text and a user command; and a controller configured to, in response to the content information being received through the first communicator, add tag information corresponding to the content information to the text input screen and display the tag information, and control the second communicator to provide a text including the tag information to the external apparatus.

The controller may be configured to display a user interface (UI) to execute an application for adding the tag information, and, in response to a user command to execute the application being received, control the first communicator to receive the content information.

In response to the text being received at the text input screen, the controller may be configured to determine whether the text is related to the content, and in response to the received text being related to the content, acquire tag information to be added to the text using the received content information, add the tag information to at least one area of the text input screen, and display the tag information.

In response to the text input screen being a web page related to the content, the controller may be configured to determine that the received text is related to the content.

The tag information may be added to a title entering area in the web page.

The controller may be configured to display a user interface (UI) to receive a user command to add the tag information to the text input screen, and, in response to the user command to add the tag information being received, determine that the received text is related to the content.

The content information may include metadata including information related to the content, and the tag information may include at least one of a title of the content, a channel, a source which provides the content, product information included in the content, place information, and person information.

The content information may include at least one of an image of the content and a sound of the content, and the controller may be configured to identify the content based on at least one of the image of the received content and the sound of the received content, acquire metadata related to the identified content, and acquire the tag information using the acquired metadata.

The content information may include tag information related to the content that is generated in the display apparatus.

The controller may be configured to display a plurality of pieces of tag information corresponding to the content information, and, in response to at least one of the plurality of pieces of tag information being selected by a user, add the selected at least one piece of tag information to the text input screen and display the tag information.

The controller may be configured to edit the tag information displayed on the text input screen according to a user command.

The external apparatus may be an SNS server or a web server.

According to an aspect of another exemplary embodiment, there is provided a multimedia system including: a display apparatus configured to transmit content information related to content displayed thereon to a user terminal apparatus; an external apparatus; and a user terminal apparatus configured to, in response to the content information being received from the display apparatus, add tag information corresponding to the content information to a text input screen and display the tag information, and provide a text including the tag information to the external apparatus.

According to an aspect of another exemplary embodiment, there is provided a user terminal apparatus including a communicator configured to receive content information related to content displayed on a display apparatus, and communicate with an external apparatus; a display configured to display a text input screen; an inputter configured to receive text and a user command; and a controller configured to, in response to the content information being received through the communicator, add tag information corresponding to the content information to the text input screen and display the tag information, and control the communicator to provide a text including the tag information to the external apparatus.

According to one or more exemplary embodiments described above, when the user of the user terminal apparatus writes a message on the content that the user is viewing, the user terminal apparatus can automatically add general information related to the content to the text input window as a tag without having to directly input the information. In addition, the user may select a variety of tag information related to the content and add the tag information to the text input window. Accordingly, the user can concentrate on writing the message to be sent and thus a user's convenience in writing the message can be improved.

The above and other aspects, features, and advantages of exemplary embodiments will be more apparent from the following description taken in conjunction with the accompanying drawings, in which:
FIG. 1 is a view showing a multimedia system according to an exemplary embodiment;
FIG. 2 is a block diagram showing a configuration of a user terminal apparatus according to an exemplary embodiment;
FIGS. 3A to 5 are views showing an operation of a user terminal apparatus according to one or more exemplary embodiments;
FIG. 6 is a flowchart showing a control method of a user terminal apparatus according to an exemplary embodiment; and
FIG. 7 is a flowchart showing an operation of a multimedia system according to an exemplary embodiment.

Hereinafter, exemplary embodiments will be described with reference to the accompanying drawings. However, it should be understood that the present disclosure is not limited to these exemplary embodiments.

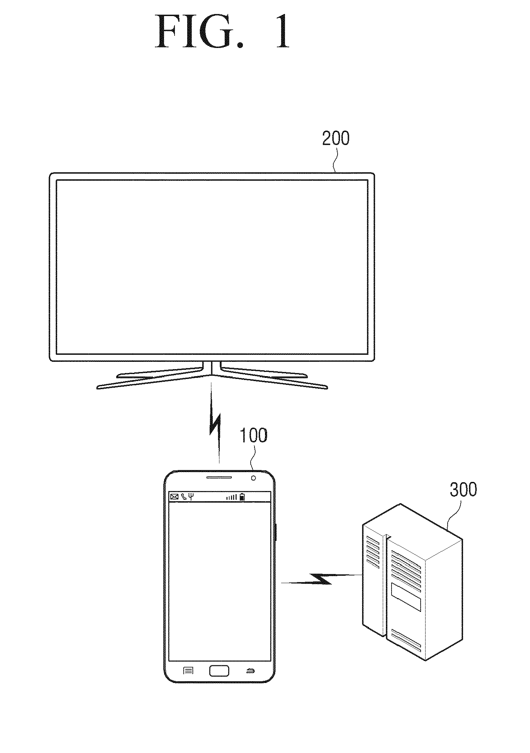

FIG. 1 is a view showing a multimedia system according to an exemplary embodiment. Referring to FIG. 1, the multimedia system includes a display apparatus 200, a user terminal apparatus 100, and an external apparatus 300.

The display apparatus 200 receives contents from various sources and displays the contents. The display apparatus 200 may be a television (TV), an electronic album, a monitor, a laptop, or the like, but it is not limited these.

In particular, the display apparatus 200 may acquire content information about displayed content, and transmit the content information to the user terminal apparatus 100.

The content information may be metadata including information related to content, at least one of an image and a sound of content, or tag information related to content generated in the display apparatus 200.

Specifically, in response to a signal requesting transmission of content information being received from the user terminal apparatus 100, the display apparatus 200 may acquire metadata such as Electronic Program Guide (EPG) including information about a displayed broadcast program, and transmit the metadata to the user terminal apparatus 100, and may transmit at least one of an image and a sound of the displayed content to the user terminal apparatus 100.

In addition, in response to a signal requesting transmission of content information being received from the user terminal apparatus 100, the display apparatus 200 may directly generate tag information related to a corresponding content using metadata including information about the displayed content, or may directly generate tag information related to a corresponding content by analyzing the image or sound of the displayed content using content recognition technology. The display apparatus 200 may transmit the tag information related to the content to the user terminal apparatus 100.

The tag information generated by the display apparatus 200 in relation to the displayed content may be the same as the tag information acquired by the user terminal apparatus 100 using the content information received from the display apparatus 200. In addition, the tag information may include information about a title of content, a channel on which content is broadcast, a source from which content is provided, products included in content, places and persons, and may be generated in a form to be added to a text input screen of the user terminal apparatus 100.

In response to the information about the content displayed on the display apparatus 200 being received, the user terminal apparatus 100 may add tag information corresponding to the content information to the text input screen and display the tag information, and may transmit the text added with the tag information to the external apparatus.

In this example, the user terminal apparatus 100 may be implemented using a mobile phone such as a smartphone, but it is not limited to this. Any device that can write a message and communicate with the display apparatus 200 and the external apparatus 300, such as a tablet PC, a laptop, a Portable Multimedia Player (PMP), a Personal Digital Assistant (PDA), a navigation device, and the like, can be applied as the user terminal apparatus 100.

Specifically, in response to an application for adding tag information being executed while the display apparatus 200 displays the content, the user terminal apparatus 100 may receive information about the displayed content from the display apparatus 200.

The information about the content received from the display apparatus 200 may be at least one of metadata including information related to the content displayed on the display apparatus 200, the image of the displayed content, the sound of the displayed content, or tag information about the content generated in the display apparatus 200.

Thereafter, the user terminal apparatus 100 may display a text input screen including an area through which text can be input according to a user command. The text input screen may be an SMS or MMS execution screen, an SNS application execution screen, or a specific web page, and the user command may be a user command to execute such a message service or an SNS application on the user terminal apparatus 100 or a user command to access a specific web page.

Accordingly, in response to text being inputted to the text input screen, the user terminal apparatus 100 acquires tag information corresponding to the content information using the content information received from the display apparatus 200, and adds the acquired tag information to the text input screen and displays the tag information.

The tag information corresponding to the content information may be acquired using the received content information, and thus may include information about at least one of the title, channel, and content providing source of the content, products included in the content, places and persons. In addition, the tag information may be a simple text including the title, channel, source of the content, or may be a text including information about the products included in the content or Uniform Resource Locator (URL) information related to the place. However, this should not be considered as limiting and the tag information may be an image or a moving image related to the products included in the content or place.

According to another exemplary embodiment, in response to text being inputted to the text input screen according to a user command, the user terminal apparatus 100 may determine whether the inputted text is related to the content displayed on the display apparatus 200.

For example, when the text input screen is a web page related to the content, the user terminal apparatus 100 may determine that the inputted text is related to the content. However, the method for determining whether the text inputted to the text input screen is related to the content displayed on the display apparatus 200 is not limited to this. For example, the user terminal apparatus 100 may display a UI to receive a user command to add tag information to the text input screen, and, in response to a user command to add tag information being inputted on the UI, the user terminal apparatus 100 may determine that the text data inputted to the text input screen is related to the content.

Accordingly, when the inputted text is related to the content, the user terminal apparatus 100 may acquire tag information to be added to the text using the content information received from the display apparatus 200.

In addition, the user terminal apparatus 100 may add the acquired tag information to at least one area of the text screen, and may display the tag information. In this case, the one area of the text screen to which the tag information is added may be a front portion or a rear portion of the inputted text when the text input screen is the SMS or MMS execution screen or the SNS application execution screen. In addition, when the text input screen is a web page related to the content, the one area of the text screen to which the tag information is added may be a title entering area on the corresponding web page. However, the one area of the text screen to which the tag information is added is not limited to this. The tag information may be added to a predetermined area of the text input screen according to an exemplary embodiment.

The user terminal apparatus 100 may acquire and display a plurality of pieces of tag information corresponding to content information, and, in response to one of the plurality of pieces of tag information being selected, may add the selected at least one piece of tag information to the text input screen and display the tag information.

In addition, the user terminal apparatus 100 may edit the tag information displayed on the text input screen according to a user command.

The user terminal apparatus 100 may transmit the text added with the tag information to the external apparatus 300. Specifically, in response to a user command to transmit the text inputted to the text input screen being inputted, the user terminal apparatus 100 may transmit the text added with the tag information to a server related to the text input screen. That is, a server which performs a message service such as an SMS or an MMS, an SNS server, or a web server which manages a web page.

That is, the external apparatus 300 may be a server which provides a message service such as an SMS or an MMS, a server which provides an SNS, or a server in which an entity running a specific web site stores and manages a web page. In addition, the external apparatus 300 may be a terminal apparatus of another user.

In an exemplary embodiment of FIG. 1, the user terminal apparatus 100 receives the content information about the displayed content from the display apparatus 200. However, this should not be considered limiting. For example, the content information may be received from an extra (additional) server which manages content information displayed on the display apparatus 200.

Accordingly, when the user wishes to write a message related to a content displayed on the display apparatus 200, wishes to post writing about the content on the web page of the corresponding content, or wishes to post comments about the content on the SNS, while viewing the content through the display apparatus 200, general information related to the corresponding content does not need to be inputted to a text input window directly and may be automatically added as a tag, so that the user can concentrate on writing the message to be transmitted and thus a user's convenience can be improved.

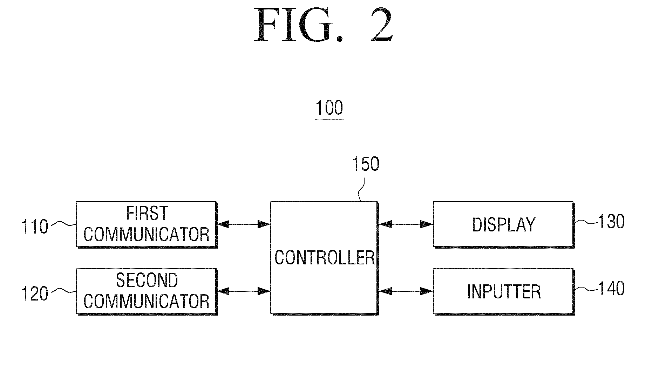

FIG. 2 is a block diagram showing a configuration of a user terminal apparatus according to an exemplary embodiment. Referring to FIG. 2, the user terminal apparatus 100 includes a first communicator 110, a second communicator 120, a display 130, an inputter (input means) 140, and a controller 150.

The first communicator 110 may communicate with a display apparatus 200. In particular, the first communicator 110 may receive content information about a content displayed on the display apparatus 200 from the display apparatus 200.

Specifically, in response to a user command to execute an application for adding tag information being inputted through the inputter 140, the first communicator 110 is controlled by the controller 150 to transmit, to the display apparatus 200, a signal requesting transmission of content information about the content displayed on the display apparatus 200. Accordingly, in response to the display apparatus 200 transmitting the content information to the user terminal apparatus 100, the first communicator 110 may receive the content information.

To achieve this, the display apparatus 200 and the user terminal apparatus 100 may communicate with each other in various communication methods such as a wireless Local Area Network (LAN), Bluetooth, HomeRF, Infrared Data Association (IrDA), Ultra-Wide Band (UWB), Zigbee, Near Field Communication, or the like. However, communication methods are not limited to these. For example, the display apparatus 200 may transmit the information about the displayed content to the user terminal apparatus 100 using acoustic coding or pattern coding. Accordingly, the first communicator 110 may be implemented to include configurations to communicate with the display apparatus 200 using an exemplary communication method.

The second communicator 120 may communicate with an external apparatus 300. The external apparatus 300 may be a server which provides a message service such as an SMS or an MMS, a server which provides an SNS, a server in which an entity running a specific web site stores and manages a web page, or a terminal apparatus used by another user. Therefore, the user terminal apparatus 100 may use the SMS or MMS, upload writing on the SNS, or access a web page through a network and leave comments through the second communicator 120.

In particular, in response to a user command to transmit text inputted to a text input screen being inputted through the inputter 140, the second communicator 120 is controlled by the controller 150 to transmit the text added with tag information to the external apparatus 300. In addition, the second communicator 120 may acquire metadata on the content from a server which provides metadata such as EPG information about the content.

To achieve this, the second communicator 120 may communicate with the external apparatus 300 using various communication methods. For example, the second communicator 120 may be configured to include various communication chips such as a Wi-Fi chip, a Bluetooth chip, an NFC chip, a wireless communication chip, and the like to communicate according to various communication standards such as wireless LAN, Bluetooth, NFC, 3rd Generation (3G), 3rd Generation Partnership Project (3GPP), Long Term Evolution (LTE), and the like. However, it is not limited to these methods.

In FIG. 2, the first communicator 110 and the second communicator 120 are separate elements. However, the first communicator 110 and the second communicator 120 may be implemented as a single configuration communicable with the display apparatus 200 and the external apparatus 300.

The display 130 displays various images. In particular, the display 130 may display a text input screen through which the user inputs text. For example, when the user wishes to write a message using an SMS or MMS and send the message to another user terminal apparatus, the text input screen may be a text input screen accompanied by an SMS or MMS application executed in the user terminal apparatus 100. In addition, when the user wishes to upload writing on an SNS or leave comments on a web page, the text input screen may be a text input screen accompanied by an SNS application executed in the user terminal apparatus 100, or a web page screen including a text input area, which is accessed by the user terminal apparatus 100.

In addition, the display 130 may display the text inputted on the text input screen by the user, and tag information added to the text input screen, and may display a UI to execute an application for adding tag information, and a UI to receive a user command to add tag information to the text input screen. In addition, when the inputter 140 and the display 130 are implemented as a touch screen, the display 130 may display a UI to receive a user command, such as a soft touch keyboard.

To achieve this, the display 130 may be implemented to include a Liquid Crystal Display (LCD) panel, an Organic Light Emitting Diode (OLED), a Plasma Display Panel (PDP), and the like, but the display is not limited to these.

The inputter 140 may receive various user commands to control the user terminal apparatus 100. In particular, the inputter 140 may receive a user command to input a text to the text input screen, or may receive a user command to transmit the text inputted to the text input screen.

In addition, the inputter 140 may receive a user command to execute an application for adding tag information to the text input screen. In addition, the inputter 140 may receive a user command to select at least one of a plurality of pieces of tag information displayed on the text input screen, or a user command to edit tag information displayed on the text input screen. To achieve this, the inputter 140 may be implemented in various forms such as a touch screen, a keyboard, a mouse, a stylus, a pointing device, and the like.

The user terminal apparatus 100 may further include a storage (e.g., memory). The storage may store various programs, applications, data, etc. for operating the user terminal apparatus 100 according to one or more exemplary embodiments. In particular, the storage may store an application for adding tag information, an application for providing a message service such as an SMS or MMS, an SNS-related application, content information received through the first communicator 110, and tag information acquired by the user terminal apparatus 100 using content information.

The controller 150 controls the overall operations of the user terminal apparatus 100. In particular, the controller 150 may control the first communicator 110 to receive content information about a content displayed on the display apparatus 200 from the display apparatus 200.

Specifically, the controller 150 may display a UI to execute an application for adding tag information on the display 130, and, in response to a user command to execute the application being inputted through the UI, may transmit a signal requesting content information to the display apparatus 200. Accordingly, in response to the content information on the displayed content being transmitted from the display apparatus 200, the controller 150 may control the first communicator 110 to receive the content information. In this case, the UI to execute the application for adding tag information may be provided as an icon, but is not limited to this.

An exemplary embodiment in which the user terminal apparatus 100 receives information about the content displayed on the display apparatus 200 from the display apparatus 200 is not limited to a method of executing the application for adding the tag information.

For example, when the user terminal apparatus 100 is located within a predetermined distance of the display apparatus 200 while the display apparatus 200 displays a content, the controller 150 may request the display apparatus 200 to transmit content information, and accordingly, control the first communicator 110 to receive the content information transmitted from the display apparatus 200. That is, the controller 150 may measure a distance to the display apparatus 200 through a distance measuring method, and, when the measured distance falls within a predetermined distance, control the first communicator 110 to automatically receive content information from the display apparatus 200.

In this case, the content information received from the display apparatus 200 may be at least one of metadata including information related to the content displayed on the display apparatus 200, the image of the displayed content, the sound of the displayed content, and tag information about the content generated in the display apparatus 200.

The controller 150 may control the display 130 to display a text input screen according to a user command. For example, when the user executes a message-related application to write a message using an SMS or MMS, the controller 130 may display a text input screen on which the user writes a message. In addition, when the user executes an SNS-related application to upload writing on the SNS, the controller 150 may display a text input screen of the SNS-related application. In addition, when the user accesses a web page to leave comments on the web page, the controller 150 may display the corresponding web page including a text input area and display a text input screen.

The controller 150 may add tag information corresponding to the content information to the text input screen, and display the tag information. Specifically, in response to a text being inputted to the text input screen, the controller 150 may acquire tag information to be added to the text using the content information received through the first communicator 110, and add the acquired tag information to at least one area of the text input screen and display the tag information.

As described above, the content information received from the display apparatus 200 may be at least one of metadata including information related to the content displayed on the display apparatus 200, the image of the displayed content, the sound of the displayed content, and tag information about the content generated in the display apparatus 200. Therefore, hereinafter, "acquiring" tag information by the controller 150 may refer to the controller 150 acquiring tag information by "generating" tag information using the metadata or at least one of the image and the sound received from the display apparatus 200, and that the controller 150 acquires tag information by "receiving" tag information generated in the display apparatus 200 in relation to the content.

Specifically, when information about the content received is in the form of metadata such as EPG information, the controller 150 may generate tag information in a form to be added to the text input screen by extracting information included in the received EPG information, such as a title of a broadcast content, a channel which provides a broadcast content, a broadcasting time, characters of a broadcast content, a background location, and related advertisements, etc.

The form of the tag information to be added to the text input screen may be a simple text form including the title, channel, source, etc., of the content, it may be a text form including products included in the content or URL information related to places, or it may be an image or moving image form related to the products, places, or persons included in the content. However, the form of the tag information is not limited to these. For example, the tag information may be provided in such a text form that an appropriate expression such as "#watching" is added to the title of the content to indicate to what the text data inputted to the text input window pertains. That is, any information which is generated in a form to be added to the text input window using content information extracted from the metadata may be the tag information.

When the content information is the image or sound of the content, the controller 150 may identify the content by analyzing the image or sound of the received content, acquire metadata on the identified content, and then generate tag information using the acquired metadata.

Specifically, the controller 150 may acquire information such as the title of the content by analyzing the image or sound received through the first communicator 110 using a content recognition technique, and identify the content displayed on the display apparatus 200. Accordingly, the controller 150 controls the second communicator 120 to acquire metadata on the corresponding content from a server which provides metadata on the identified content, and generate a variety of tag information from the acquired metadata as described above.

However, the method for the controller 150 to acquire the tag information using the content recognition technique is not limited to the above-described method. The controller 150 may generate tag information using a variety of pieces of information about the content acquired through content recognition, without acquiring metadata from an external server.

In addition, in the above-described example, the controller 150 identifies the content and then acquires the metadata related to the identified content. However, it is not limited to this. The controller 150 may receive metadata from a server which provides metadata such as EPG information in advance, and store the metadata in a storage, and may acquire tag information about the identified content using the metadata stored in the storage.

Meanwhile, when the display apparatus 200 generates tag information related to the content displayed thereon and transmits the tag information, the controller 150 may control the first communicator 110 to receive the tag information and acquire the tag information related to the content.

Specifically, the display apparatus 200 may also acquire metadata including information about the content, such as EPG information, and identify the content using a content recognition technique. Therefore, the display apparatus 200 may generate tag information related to the content in the above-described method as the user terminal apparatus 100. The tag information related to the content which is generated in the display apparatus 200 may be transmitted to the user terminal apparatus 100, and the controller 150 receives the tag information related to the content from the display apparatus 200, and acquires the tag information to be added to a text inputted to the text input screen.

According to another exemplary embodiment, when the text inputted to the text input screen is related to the content, the controller 150 may acquire tag information to be added to the text using the content information.

Specifically, in response to a text being inputted to the text input screen according to a user command, the controller 150 may determine whether the inputted text is related to the content displayed on the display apparatus 200.

For example, when the content information received through the first communicator 110 is metadata, the controller 150 may acquire a variety of information such as the title, channel, source, characters of the content displayed on the display apparatus 200 using the metadata, since the received metadata includes a variety of information related to the content. Therefore, the controller 150 may determine whether the text inputted to the text input screen is related to the content displayed on the display apparatus 200 by comparing the acquired information about the content and the text inputted to the text input screen. For example, when the text inputted to the text input screen includes the title or characters of the content, the controller 150 may determine that the inputted text is related to the content.

In addition, when the received content information is at least one of the image and the sound of the content displayed on the display apparatus 200, the controller 150 may identify the content by analyzing at least one of the image and the sound, and acquire metadata on the identified content through the second communicator 120. Therefore, the controller 150 may determine whether the text inputted to the text input screen is related to the content displayed on the display apparatus 200, using the received metadata.

In addition, when the received content information is the tag information which is generated in the display apparatus 200 in relation to the displayed content, the tag information includes information about the title of the content, the channel on which the content is broadcasted, the source which provides the content, the product included in the content, place and person, and thus the controller 150 may determine whether the text inputted to the text input screen is related to the content displayed on the display apparatus 200 using the tag information.

In addition, when the text input screen displayed on the display 130 is a web page related to the content, the controller 150 may determine that the text inputted to the text input screen is data related to the content. Specifically, the controller 150 may analyze the web page including the currently displayed text input screen and determine whether the corresponding web page is related to the content displayed on the display apparatus 200. In response to determining that the web page is related to the content, the controller may determine that the text inputted to the text input area of the web page is related to the content. This is because when the user accesses a web page related to the content that the user is viewing and inputs text data to the text input area on the web page, the text data is highly likely to be related to the corresponding content.

For example, when the web page is created by HyperText Markup Language (HTML), the controller 150 may acquire information such as the title of the web page by analyzing the web page, and may determine whether the corresponding web page is related to the content by comparing the acquired information and the title of the content acquired using the content information received through the first communicator 110. However, the method of determining whether the web page is related to the content is not limited to the above-described method. For example, the controller 150 may analyze the address of the web page and determine whether the currently displayed web page is related to the content.

In addition, the controller 150 may display a UI to receive a user command to add tag information to the text input screen, and, in response to a user command to add tag information being inputted through the displayed UI, the controller 150 may determine that the text inputted to the text input screen is related to the content. In this case, the UI to receive the user command to add the tag information may be provided as an icon or a check box, but it is not limited to this.

As described above, in response to determining that the inputted text is related to the content, the controller 150 may acquire tag information to be added to the text using the content information received through the first communicator 110.

In response to the tag information being acquired as described above, the controller 150 may add the acquired tag information to at least one area of the text input screen displayed on the display 130, and display the tag information. For example, the controller 150 may add the tag information to a front portion or rear portion of the text inputted to the text input screen, and display the tag information. However, it is not limited to this. For example, when the text input screen is a web page, the controller 150 may add the tag information to a title area in the web page.

In addition, the controller 150 may automatically add the tag information to an appropriate location of the text input screen. Specifically, the user terminal apparatus 100 generally knows information about the overall layout of the text input screen, the location of a text input area in the text input screen, or information about whether the text input area is a title input area or a message content input area, in order to display various text input screens. In addition, the controller 150 may know the front or rear location of the text inputted to the text input area of the text input screen.

Accordingly, in response to the tag information being acquired, the controller 150 may add the tag information to an appropriate location of the text input screen using the above-described information, and display the tag information.

For example, the text input screen such as an SMS message writing screen or a writing screen on a web page may further include a "title" input area to which the title of a message is inputted, in addition to a "message content" input area in which a message is written or the content of a message is inputted. In this case, in response to a text being inputted to the "message content" input area by the user, the controller 150 may acquire tag information corresponding to content information, add one of the pieces of tag information, such as the title of the content, to the "title" input area, and display the tag information even if the user does not directly input the title to the "title" input area.

In another example, it may be assumed that the text input screen is a text input screen accompanied by an executed SNS application. In this case, in response to a text being inputted to the text input area of the text input screen, the controller 150 may acquire tag information corresponding to content information, add the tag information in such a text form that an appropriate expression such as "#watching" is added to the "title of the content" to the front or rear portion of the inputted text, and display the tag information to indicate to what the text inputted to the text input area pertains, even if the user does not directly input information indicating to what the inputted text pertains.

Meanwhile, the controller 150 may acquire a plurality of pieces of tag information using content information received through the first communicator 110, and display the plurality of pieces of tag information. Accordingly, in response to at least one being selected from the plurality of pieces of tag information, the controller 150 may add the selected at least one piece of tag information to the text input screen, and display the tag information.

For example, in response to a text related to the content being inputted to the text input area, the controller 150 may display a tag information list including the plurality of pieces of tag information on the text input screen, and, in response to at least one piece of tag information being selected from the tag information list by the user, the controller 150 may add the selected at least one piece of tag information to the text input screen, and display the tag information.

In addition, the controller 150 may edit the tag information displayed on the text input screen according to a user command. For example, in response to a user command to delete a part or all of the displayed tag information, or a user command to change the displayed tag information to different tag information, or a text being inputted through the inputter 140, the controller 150 may edit the tag information according to the user command and display the edited tag information.

The controller 150 may control the second communicator 120 to transmit the text added with the tag information to the external apparatus 300. Specifically, in response to a user command to transmit the text inputted to the text input screen being inputted through the inputter 140, the controller 150 may control the second communicator 120 to transmit the text added with the tag information to the external apparatus 300. The user command to transmit the text inputted to the text input screen by the user to another user terminal, an SNS server, or a web server, etc., may be inputted by a user manipulation through the inputter 140, such as pressing at least one of a "send", "register", "forward", and "upload" buttons displayed on the text input screen.

Accordingly, the text written by the user of the user terminal apparatus 100 in relation to the content displayed on the display apparatus 200, and the tag information added to the text may be transmitted to other user terminal apparatuses via a server which provides a message service or an SNS server, or may be registered at a web server which manages the web page related to the content, so that other users accessing the corresponding web page can read the text.

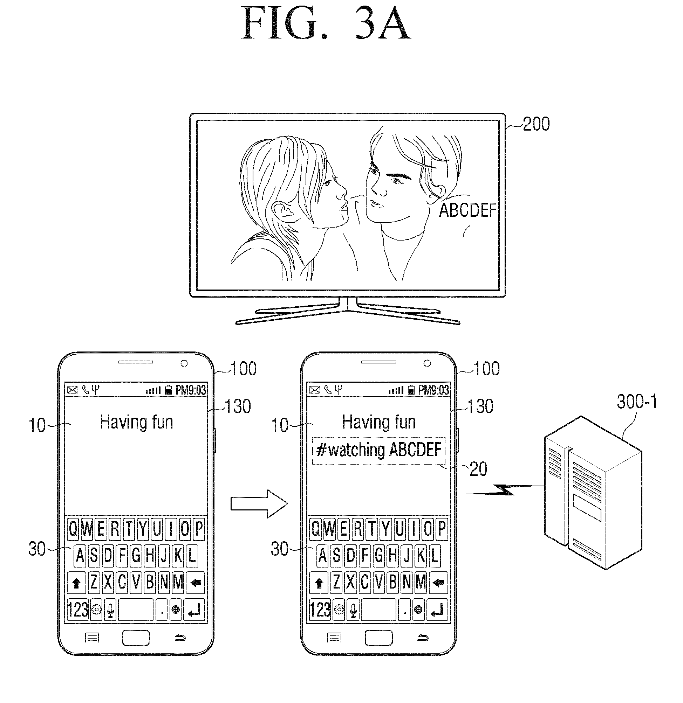

Hereinafter, examples of operations of the user terminal apparatus 100 will be explained with reference to FIGS. 3A to 5. FIGS. 3A to 5 illustrate one or more exemplary embodiments of the user terminal apparatus 100, however, exemplary embodiments are not limited to these.

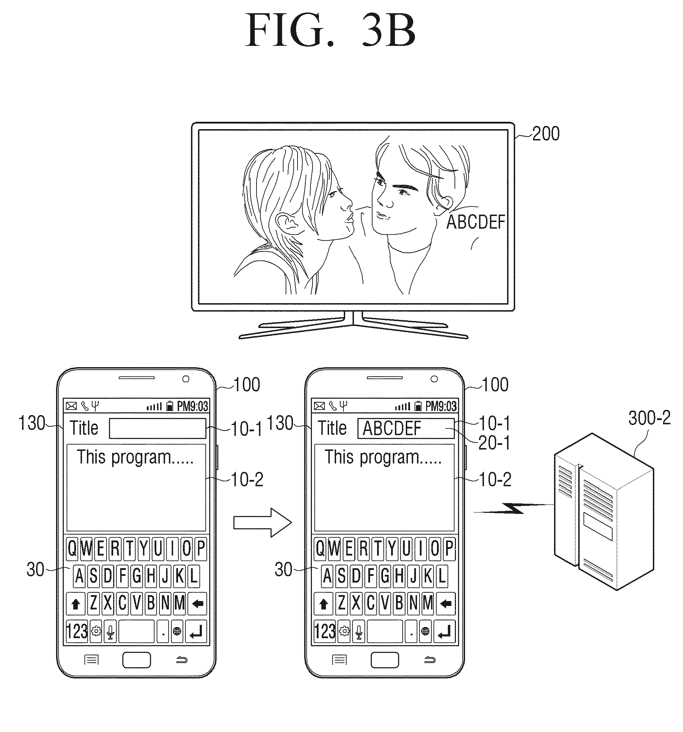

FIGS. 3A and 3B illustrate a case in which, while a user views a content titled "ABCDEF" through the display apparatus 200, the user posts a message about "ABCDEF" on an SNS or leaves comments about "ABCDEF" on a web page related to "ABCDEF."

FIG. 3A illustrates a case in which the user posts a message on an SNS. The user may wish to post a message saying "Having fun" on the SNS, while viewing broadcast content "ABCDEF" through the display apparatus 200. Accordingly, in response to an SNS application being executed by the user, the user terminal apparatus 100 may display a text input screen 10 and a keyboard 30 to input a text on the display 130.

The user terminal apparatus 100 shown on the left of FIG. 3A shows that the user inputs text "Having fun" to the text input screen 10 through the keyboard 30. According to an exemplary embodiment, the user terminal apparatus 100 may receive content information about "ABCDEF" from the display apparatus 200, and acquire tag information to be added to text "Having fun" which is inputted to the text input screen 10 using the received content information.

Accordingly, the user terminal apparatus 100 adds the acquired tag information to at least one area of the text input screen, and, in response to a user command to transmit the inputted text, the user terminal apparatus 100 may transmit the text added with the tag information to the external apparatus 300. Accordingly, the user terminal apparatus 100 on the right of FIG. 3A shows that the acquired tag information "#watching ABCDEF" 20 is added to the rear portion of text "Having fun", which is one area of the text input screen, and displayed on the text input screen 10, and the text added with the tag information is transmitted to an SNS server 300-1 according to a user's transmission command.

FIG. 3B illustrates a case in which the user leaves comments about "ABCDEF" on a web page related to "ABCDEF" through the user terminal apparatus 100. In response to the user accessing a web page related to "ABCDEF" through the user terminal apparatus 100, the user terminal apparatus 100 may display a text input screen including a text title input area 10-1 and a text content input area 10-2, and a screen including a keyboard 30.

The user terminal apparatus 100 on the left of FIG. 3B shows that the user inputs comments about "ABCDEF" to the text content input area 10-2 in the form of a text like "This program..." through the keyboard 30. According to an exemplary embodiment, the user terminal apparatus 100 may receive information about "ABCDEF" from the display apparatus 200, and acquire tag information in the form of a text to be added to the text title input area 10-1 using the content information about "ABCDEF."

The user terminal apparatus 100 may add the acquired tag information to at least one area of the text input screen and display the tag information, and, in response to a user command to transmit the inputted text, transmit the text added with the tag information to the external apparatus 300. Accordingly, the user terminal apparatus 100 on the right of FIG. 3B shows that the acquired tag information "ABCDEF" 20-1 is added to the text title input area 10-1, which is one area of the text input screen 10-1, 0-2, and is displayed, and the tag information is transmitted to a web server 300-2 which manages the web page related to "ABCDEF" along with the text inputted to the text content input area 10-2 according to a user's transmission command.

In the example of FIGS. 3A and 3B, the acquired tag information 20, 20-1 is automatically added to the text input screen and displayed. However, the acquired tag information 20, 20-1 may not be displayed on the display 130 and may be added to the text inputted to the text input screen and transmitted to the external apparatus 300 according to a user's transmission command.

In the examples of FIGS. 3A and 3B, the user terminal apparatus 100 may acquire the tag information only when the text inputted to the text input screen is related to "ABCDEF." In the example of FIG. 3B, since the user accesses the web page related to "ABCDEF," the user terminal apparatus 100 may determine that the text input screen 10-1, 10-2 displayed on the display 130 is a text input screen on the web page related to "ABCDEF." Accordingly, the user terminal apparatus 100 determines that the text inputted to the text content input screen 10-2 is related to "ABCDEF," and acquires the tag information.

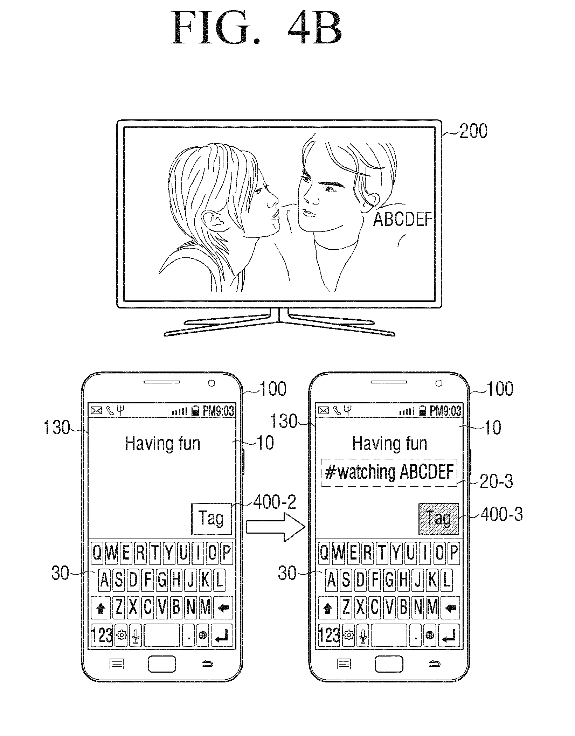

The user terminal apparatus 100 may determine whether the text inputted to the text input screen is related to the content according to whether a user command to add tag information is inputted on a UI in the form of a UI 400-2 of FIG. 4B, or by directly analyzing the text inputted to the text input screen, and determine whether to acquire tag information using the received content information according to the result of the determination. The UI 400-2 of FIG. 4B is a UI indicating whether the text inputted to the text input screen is related to the content in a state in which the content information has been already received, that is, a UI to receive a user command to add tag information to the text input screen.

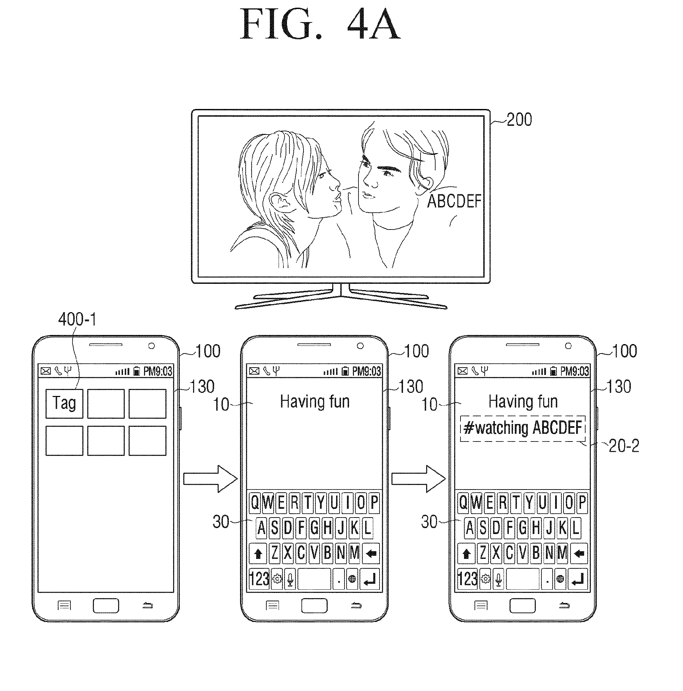

FIGS. 4A and 4B are views to illustrate a UI to execute an application for adding tag information according to one or more exemplary embodiments. FIG. 4A illustrates a UI as an icon to execute an application for adding tag information, and the relevant operations of the user terminal apparatus 100.

Specifically, the user terminal apparatus 100 on the left of FIG. 4A displays a UI 400-1 as an icon to execute an application for adding tag information to the text input screen on the display 130 along with other execution icons.

In this case, in response to a user command to execute the application for adding tag information being inputted by selecting the UI 400-1 in the form of the icon, the user terminal apparatus 100 requests the display apparatus 200 to transmit information about the content displayed on the display apparatus 200, and accordingly, in response to the content information about the content titled "ABCDEF" being transmitted from the display apparatus 200, the user terminal apparatus 100 receives the content information.

Thereafter, as shown in the user terminal apparatus 100 in the middle of FIG. 4A, the user executes an SNS application in order to post a message about the content titled "ABCDEF", which is displayed on the display apparatus 200, on an SNS, and, in response to text data "Having fun" being inputted to the displayed text input screen 10, the user terminal apparatus 100 may acquire tag information "#watching ABCDEF" 20-2 using the content information about "ABCDEF", as shown in the user terminal apparatus 100 on the right of FIG. 4A, and automatically add the tag information to the text input screen 10.

The user terminal apparatus 100 on the left of FIG. 4B shows that the user executes an SNS application and inputs text data "Having fun" to the text input screen 10, while viewing the content titled "ABCDEF" through the display apparatus 200. In this case, a UI 400-2 in the form of an icon is displayed on the text input screen 10. The UI 400-2 is a UI to execute the application for adding tag information.

Accordingly, according to an exemplary embodiment of FIG. 4B, the user may execute the application for adding tag information by inputting a user command on the UI 400-2 while inputting the text to the text input screen 10.

That is, as shown in the user terminal apparatus 100 on the right of FIG. 4B, in response to a user command being inputted on a UI 400-3, the user terminal apparatus 100 may receive content information about "ABCDEF" from the display apparatus 200, acquire tag information using the received content information, and then add and display the acquired tag information 20-3 to "Having fun." In this case, the UI 400-3 may be shaded to indicate that the function for adding tag information to the text input screen is currently in progress.

Meanwhile, in response to the tag information adding function being disabled by selecting the UI 400-3 again, the tag information 20-3 added to the text input screen may be deleted. In addition, tag information which has been added before the user disables the tag information adding function may be maintained and tag information may not be added after the tag information adding function is disabled.

In an exemplary embodiment of FIG. 4B, in response to a user command being inputted through the UI 400-2, the user terminal apparatus 100 receives content information from the display apparatus 200, acquires tag information, and adds the tag information to the text input screen. However, according to another exemplary embodiment, content information may be received and tag information may be acquired in advance prior to a command being inputted through the UI 400-2, and, in response to a user command being inputted through the UI 400-2, the acquired tag information may be added to the text input screen and displayed.

In addition, according to another exemplary embodiment, in response to a user command being inputted through the UI 400-1 of FIG. 4A, the user terminal apparatus 100 may execute the application for adding tag information, receive content information from the display apparatus 200, and acquire tag information, but may not display it. After that, in response to an application for writing a message being executed and the text input screen being displayed, the user terminal apparatus 100 may display the UI 400-2 on the text input screen, and add the tag information to an inputted text according to a user command inputted through the UI 400-2 and display the tag information.

In the examples of FIGS. 4A and 4B, the UIs 400-1, 400-2 are provided in the form of the icon. However, the UI to execute the application for adding tag information is not limited to these. For example, a UI in the form of a check box to check the tag information adding function for adding tag information to the text input screen may be provided.

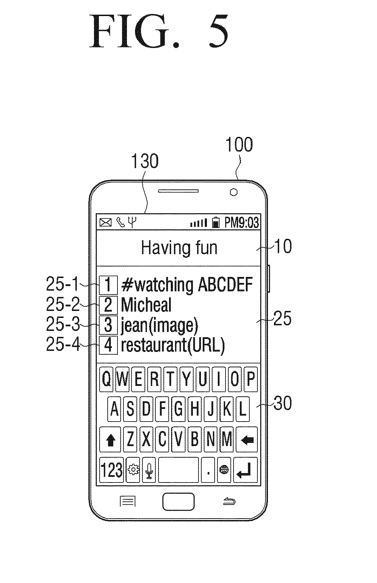

FIG. 5 is a view to illustrate a method for adding acquired tag information to a text input screen according to another exemplary embodiment. The user terminal apparatus 100 may acquire tag information to be added to a text input screen using received content information. A plurality of pieces of tag information may be acquired and may be displayed as an extra tag information list 25 along with the text input screen 10, as shown in FIG. 5.

Referring to FIG. 5, the tag information list 25 includes a text 25-1 in a form in which an appropriate expression such as "#watching" is added to the title of the content "ABCDEF" to indicate to what the text input by the user pertains, a name of a character of the content 25-2, an image on clothes worn by the character 25-3, and URL information 25-4 related to the place included in the content, as tag information to be added to the text input screen.

Accordingly, the user may select one piece of tag information from the tag information list 25 to add it to the text input screen 10. For example, in response to reference numeral 25-3 being selected, tag information in the form of an image regarding jeans may be added to the text input screen 10, and, in response to reference numeral 25-4 being selected, URL information about a restaurant may be added to the text input screen 10.

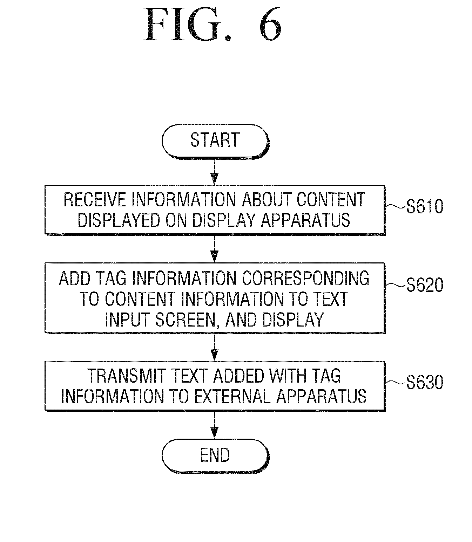

FIG. 6 is a flowchart showing a control method of a user terminal apparatus 100 according to an exemplary embodiment. Referring to FIG. 6, the user terminal apparatus 100 may receive content information about content displayed on the display apparatus 200 (S610).

For example, the user terminal apparatus 100 may display a UI to execute an application for adding tag information, and, in response to a user command to execute the application being inputted, transmit a signal requesting content information to the display apparatus 200. Accordingly, in response to the content information about the displayed content being transmitted from the display apparatus 200, the user terminal apparatus 100 may receive the content information.

According to another exemplary embodiment, in response to the user terminal apparatus 100 being located within a predetermined distance of the display apparatus 200, the user terminal apparatus 100 may automatically transmit a signal requesting the content information to the display apparatus 200, and may receive the content information from the display apparatus 200.

The content information may include at least one of metadata information related to the content, the image of the content, the sound of the content, and tag information about the content generated in the display apparatus 200.

Thereafter, the user terminal apparatus 100 may add tag information corresponding to the received content information to a text input screen and display the tag information (S620).

Specifically, the user terminal apparatus 100 may display a text input screen according to a user command. The text input screen may be an SMS or MMS execution screen, an SNS application execution screen, or a specific web page screen, and the user command may be a user command to execute a message service or an SNS application on the user terminal apparatus 100, or may be a user command to access a specific web page.

Accordingly, in response to a text being inputted to the text input screen by the user, the user terminal apparatus 100 may acquire tag information to be added to the text inputted to the text input screen using the received content information. The tag information may include at least one of the title, channel, and source of the content, product information included in the content, place information, and person information.

According to another exemplary embodiment, the user terminal apparatus 100 may acquire the tag information using the received content information only when the text inputted to the text input screen is related to the content. In this case, when the text input screen is a web page related to the content, the user terminal apparatus 100 may determine that the inputted text is related to the content. In addition, the user terminal apparatus 100 may display a UI to receive a user command to add tag information to the text input screen, and, in response to a user command being inputted through the UI, determine that the inputted text is related to the content.

In response to the tag information to be added to the text being acquired, the user terminal apparatus 100 may add the acquired tag information to the text input screen and display the tag information. Specifically, the user terminal apparatus 100 may add the tag information to at least one area of the text input screen and display the tag information.

According to an exemplary embodiment, the user terminal apparatus 100 may acquire a plurality of pieces of tag information corresponding to the content information and display the tag information, and, in response to one of the plurality of pieces of tag information being selected by the user, add the selected at least one piece of tag information to the text input screen and display the tag information.

In addition, the user terminal apparatus 100 may edit the tag information displayed on the text input screen according to a user command, and display the edited tag information.

Thereafter, in response to a user command to transmit the text inputted to the text input screen being inputted by the user, the user terminal apparatus 100 may transmit the text added with the tag information to the external apparatus 300 (S630). The external apparatus 300 may be an SNS server or a web server which manages a web page related to the content, but it is not limited to these. The external apparatus 300 may be a server which provides a message service such as an SMS or MMS, or a user terminal apparatus of another user.

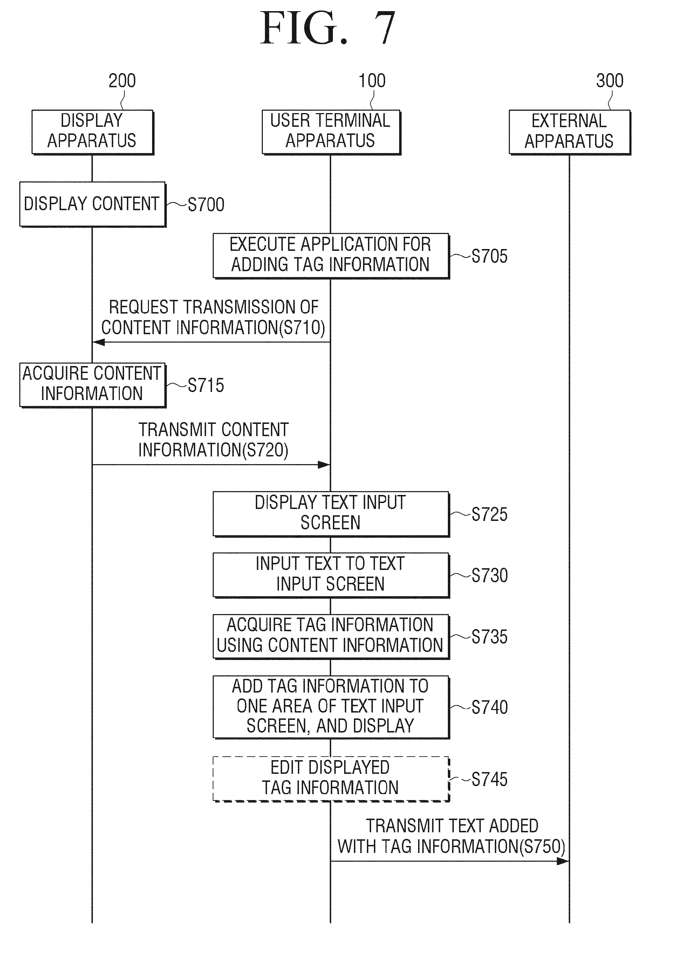

FIG. 7 is a flowchart illustrating an operation of a multimedia system according to an exemplary embodiment. Referring to FIG. 7, content is displayed on the display apparatus 200 (S700). The user may wish to post a message about the content on an SNS or write comments about the content on the web page related to the content, while viewing the displayed content. In addition, the user may wish to write a message about the content that the user is viewing using the SMS or MMS and send the message to a user terminal apparatus of another user.

Accordingly, the user executes an application for adding tag information to a text input screen on the user terminal apparatus 100 (S705). In response to the application for adding the tag information being executed, the user terminal apparatus 100 requests the display apparatus 200 to transmit content information about the displayed content (S710).

The display apparatus 200 which receives the request acquires content information about the displayed content (S715), and transmits the content information to the user terminal apparatus 100 (S720), and the user terminal apparatus 100 receives the content information transmitted from the display apparatus 200.

Thereafter, the user terminal apparatus 100 displays a text input screen (S725). Specifically, the user terminal apparatus 100 may display a corresponding text input screen as the user executes a message writing application such as an SMS, an MMS, or an SNS application to write comments on the content, and display a corresponding text input screen as the user accesses a web page related to the content.

Accordingly, in response to a text being inputted to the text input screen by the user (S730), the user terminal apparatus 100 may acquire tag information to be added to the text using the content information received from the display apparatus 200 (S735), and add the acquired tag information to one area of the text input screen and display the tag information (S740).

According to an exemplary embodiment, the user terminal apparatus 100 may determine whether the text inputted to the text input screen is related to the content, and, in response to the text being related to the content, acquire the tag information to be added to the text using the content information, add the acquired tag information to at least one area of the text input screen and display the tag information.

For example, the user terminal apparatus 100 may determine whether the text input screen is a web page related to the content, and, in response to the text input screen being related to the web page related to the content, acquire the tag information and add the acquired tag information to a title entering area in the web page.

The user terminal apparatus 100 may edit the displayed tag information according to a user command (S745).

As described above, the text inputted to the text input screen and the tag information added to at least one area of the text input screen may be transmitted to the external apparatus 300 according to a user command. That is, the user terminal apparatus 100 may transmit the text added with the tag information to the external apparatus 300 according to a user command (S750).

Accordingly, a message comprising the text written by the user of the user terminal apparatus 100 in relation to the content displayed on the display apparatus 200, and the tag information added to the text may be transmitted to other user terminal apparatuses via a server which provides a message service or an SNS server, or may be registered at a web server which manages the web page related to the content, so that other users accessing the corresponding web page can read the text.

In an exemplary embodiment of FIG. 7, the application for adding the tag information is executed (S705) before the text input screen is displayed (S725). However, exemplary embodiments are not limited to this. As described above with reference to FIGS. 4A and 4B, the text input screen may be displayed first and then the application for adding the tag information may be executed, and the content information may be received from the display apparatus 200 and then the tag information may be acquired.

According to one or more exemplary embodiments as described above, when the user of the user terminal apparatus writes a message about the content that the user is viewing, the user terminal apparatus can automatically add general information related to the content to the text input window as a tag without having to directly input the information. In addition, the user may select a variety of tag information related to the content and add the tag information to the text input window. Accordingly, the user can concentrate on writing the message to be sent and thus a user's convenience in writing the message can be improved.

The control method of the user terminal apparatus or the operation of the controller of the user terminal apparatus according to one or more exemplary embodiments may be implemented as a program code, and stored in a non-transitory readable medium. The user terminal apparatus on which the non-transitory readable medium is mounted may execute the program code and perform the control method of the user terminal apparatus according to one or more exemplary embodiments.

For example, a program code for performing a control method of a user terminal apparatus, including: receiving content information about a content displayed on a display apparatus; adding tag information corresponding to the content information to a text input screen displayed on the user terminal apparatus, and displaying the tag information; and transmitting a text added with the tag information to an external apparatus may be stored in a non-transitory readable medium.

The non-transitory computer readable medium may refer to a medium that stores data semi-permanently, such as a register, a cache, and a memory, and is readable by an apparatus. Specifically, the above-described various applications or programs may be stored in a non-transitory computer readable medium such as a compact disc (CD), a digital versatile disk (DVD), a hard disk, a Blu-ray disk, a universal serial bus (USB), a memory card, and a read only memory (ROM).

The exemplary embodiments and advantages are merely exemplary and are not to be construed as limiting the inventive concept. It should be understood that the exemplary embodiments can be readily applied to other types of apparatuses. Also, the description of one or more exemplary embodiments is intended to be illustrative, and not to limit the scope of the claims, and many alternatives, modifications, and variations should be apparent to those skilled in the art, while still falling within the scope of the invention as defined by the claims.

## Claims

1. A control method of a user terminal apparatus, comprising:
receiving content information related to content displayed on a display apparatus;
adding tag information corresponding to the content information to a text input screen displayed on the user terminal apparatus, and displaying the tag information; and
transmitting a message including the tag information to an external apparatus.

2. The control method of claim 1, further comprising displaying a UI to execute an application for adding the tag information,
wherein receiving the content information comprises receiving the content information in response to a user command to execute the application being input.

3. The control method of claim 1 or 2, wherein adding and displaying the tag information comprises:
in response to text being input to the text input screen, determining whether the text is related to the content or not;
in response to the input text being related to the content, acquiring tag information to be added to the text using the received content information; and
adding the tag information to at least one area of the text input screen and displaying the tag information.

4. The control method of claim 3, wherein determining whether the text is related to the content or not comprises, in response to the text input screen being a web page related to the content, determining that the input text is related to the content.

5. The control method of claim 4, wherein the tag information is added to a title entering area in the web page.

6. The control method of claim 3, wherein the determining whether the text is related to the content or not comprises displaying a UI to receive a user command to add the tag information to the text input screen, and, in response to the user command to add the tag information being input, determining that the input text is related to the content.

7. The control method of any one of the preceding claims, wherein the content information is metadata including information related to the content, and
wherein the tag information comprises at least one of a title of the content, a channel, a source which provides the content, product information included in the content, place information and person information.

8. The control method of any one of the preceding claims, wherein the content information comprises at least one of an image and a sound of the content, and
wherein acquiring the tag information comprises:
identifying the content based on at least one of the image and the sound of the received content;
acquiring metadata on the identified content; and
acquiring the tag information using the acquired metadata.

9. The control method of any one of the preceding claims, wherein the content information is tag information which is generated in the display apparatus in relation to the content.

10. The control method of any one of the preceding claims, wherein adding and displaying the tag information comprises:
displaying a plurality of pieces of tag information corresponding to the content information; and
in response to at least one of the plurality of pieces of tag information being selected, adding the selected at least one piece of tag information to the text input screen and displaying the tag information.

11. The control method of any one of the preceding claims, further comprising editing the tag information displayed on the text input screen according to a user command.

12. The control method of any one of the preceding claims, wherein the external apparatus is an SNS server or a web server.

13. A user terminal apparatus, comprising:
a first communicator configured to receive content information related to content displayed on a display apparatus;
a second communicator configured to communicate with an external apparatus;
a display configured to display a text input screen;
input means configured to receive text and a user command; and
a controller configured to, in response to the content information being received through the first communicator, add tag information corresponding to the content information to the text input screen and display the tag information, and control the second communicator to transmit a message including the tag information to the external apparatus.

14. The user terminal apparatus of claim 13, wherein the controller is configured to display a UI to execute an application for adding the tag information, and, in response to a user command to execute the application being input, control the first communicator to receive the content information.

15. The user terminal apparatus of claim 13 or 14, wherein, in response to the text being input to the text input screen, the controller is configured to determine whether the text is related to the content or not, in response to the input text being related to the content, acquire tag information to be added to the text using the received content information, and add the tag information to at least one area of the text input screen and display the tag information.
